# EUROPEAN PATENT SPECIFICATION

(11) **EP 0 451 921 B1**
(45) Date of publication and mention of the grant of the patent: **04.01.1995**
(21) Application number: 91200827.3
(22) Date of filing: 10.04.1991
(51) Int. Cl.: B29B 7/76

(54) **Mixing head for mixing of liquid chemically interreacting plastic components**
Mischkopf zum Mischen flüssiger chemisch interreagierender plastischer Komponenten
Tête de mélange pour mélanger des composants de matière plastique liquides avec interréaction chimique

(30) Priority: 13.04.1990 NL 9000889
(43) Date of publication of application: 16.10.1991
(73) Proprietor: DSM RIM NYLON V.O.F, NL-6222 NJ Maastricht (NL)
(72) Inventor: Baetsen, Gerardus Hubertus, NL-6114 XG Susteren (NL)
(74) Representative: Bleukx, Lucas Lodewijk Maria, Ir.

(56) References cited:
- DE-A- 2 051 109
- DE-A- 2 053 684
- FR-A- 1 215 477
- GB-A- 1 154 561
- US-A- 3 189 325
- US-A- 3 843 023
- US-A- 3 999 740

## Description

The invention relates to a mixing head for mixing of at least two liquid chemically interreacting plastic components, comprising a casing provided with a mixing chamber containing an axially movable plunger, with two channels ending in the mixing chamber to feed in the plastic components, which mixing chamber is provided with a connection to a mould, wherein the plunger can rotate and wherein over part of its length the plunger fits closely in the mixing chamber, while the circumference of the rest of its length, up to the free end of the plunger, is provided with shear mixing means.

Such mixing heads are used for instance for the intensive shear-mixing of viscous materials, such as, for example reactive resin materials as described in US-A-3189325. One of the problems with such mixing heads is that they foul owing to reacted mixture remaining in the mixing head. EP-A-257240 describes a mixing head with for cleaning of the plunger a ceramic elongated accessory being incorporated in the mixing head, which accessory is supported at the two short sides by compression springs. After the plunger has moved downward a thin film of reacted mixture is formed on its circumference, which is scraped off by the ceramic body as the plunger moves upward again. The material scraped off is blown out of the mixing head by purging air.

Cleaning of the mixing head requires rather far-reaching provisions in the mixing head. Thus, the ceramic body must have a very close-fitting bore for the plunger, while for the compression springs and the inlet and outlet of purging air separate bores have to be made in the casing of the mixing head. This is laborious, while moreover said patent specification makes no mention of the cleansing of the gate of the mould. In the gate as well, mixture remaining behind polymerizes and has to be removed.

The object of the invention is to provide a mixing head as mentioned in the heading, which does not have the above-mentioned drawbacks and is very suitable for the mixing of liquid chemically interreacting plastics, and which mixing head is fully self-cleansing without having required considerable constructional modifications.

According to the invention this is achieved because the plunger is able to rotate in two directions and its circumference is provided with helically running ribs as shear mixing means. While the components are being fed into the mixing chamer, the part of the plunger carrying ribes is inside the mixing chamber. This part of the plunger is called the mixing body.

The outer diameter of this part of the plunger with ribs fits in the mixing chamber with minor play. The components are supplied under pressure into the mixing chamber. The rotating motion of the plunger causes a return-pumping motion of the components against the supply pressure of the components. Due to the occurrence of shearing forces and the passage of the film layer along the ribs, very intensive mixing of the components takes place. In spite of the return-pumping motion by the mixing body, the supply under pressure of the components causes the mass flow to move to the free end of the plunger and via the gate into the mould.
The ribbed part of the plunger is slightly tapered at its free end. As a consequence, the film layer steadily increases in thickness and the pressure as well as the outflow speed decrease. When a sufficient quantity of mixture is formed for a mould charge, the plunger is moved in the direction of the mould opening. Next, the rotating motion of the plunger is stopped. The close-fitting plunger cleanses the mixing chamber. After injection and full reacting of the mixture the opposite rotating and axial motions of the plunger are started. By these two motions the ribbed part of the plunger rotates out of the polymerized mixture in the gate. After demoulding, the tube-shaped cull is removed from the moulded product.
Owing to this design the ribbed part of the plunger as well as the gate of the mould are effectively cleansed.

The design according to the invention ensures very intensive mixing of the components supplied, besides very good cleansing of the mixing chamber as well as of the ribbed part of the plunger. By moving forward the close-fitting part of the plunger, the mixture of components that is present in the mixing chamber is transported along to the injection cavity of the mould.

The invention also relates to a process for the mixing of two liquid chemically interreacting components, with utilization of a mixing head according to the invention.

In the process according to the invention, the ribbed part of rotating plunger is in the mixing chamber during the supply under pressure of the liquid plastic components, while the mass flow of the components moves, against the return-pumping motion of the rotating ribbed part of the plunger, to the free end of the plunger and via a gate into the mould, after which, after mixing, the plunger is moved axially towards the gate and the rotating motion of the plunger is stopped, the mixing chamber being cleansed by the close-fitting part of the plunger and the rest of the mixture being injected into the mould as the plunger moves forward, after which the mixture polymerizes. Subsequently the opposite rotating and axial motions of the plunger are started, so that the ribbed part of the plunger rotates out of the polymerized mixture in the gate.

With the mixing head and the process with it according to the invention, injection pressure independent mixing is obtained, as well as pressure and speed decrease in the mixing head. Low turbulence occurs in the mixing head, so that the mixture is injected into the mould with little turbulence.

As a consequence of said advantages, neither foaming nor air inclusion occurs when the mixing head is opened and during injection into the mould. As said, the mixing head is fully
self-cleansing, which eliminates the need for time-consuming cleaning of the mixing head and the plunger after each injection.

The mixing head according to the invention is highly suitable for instance for use in the production of mixtures for RIM-Nylon products.

Other characteristics and advantages will appear from the following description, with reference to the accompanying drawings, in which:
Fig. 1 is a cross section of the mixing head, with the plunger in the mixing and injection position and the feed channels for the plastic components opened;
Fig. 2 is a cross section of the mixing head, with the plunger in the recirculation position and the feed channels for the plastic components closed.

As shown by fig.'s 1 and 2, the mixing head 1 is provided with a bore 2 in which end channels 3 and 4 for supply of the separate plastic components, which after mixing react with each other to form a polymerized product. The bore 2 accommodates a plunger 5, comprising a part 6 which fits closely in the bore 2 and a part 7 whose circumference is provided with helically running ribs 8. The plunger 5 can rotate in two directions and can be moved axially. The mixing head 1 is connected to a mould 9. The bore 2 of the mixing head 1 connects to the gate 10 of the mould 9. In the feed channels 3 and 4 for the plastic components there are axially movable valves 11 and 12 with which the feed openings to the bore or mixing chamber 2 can be opened and closed.

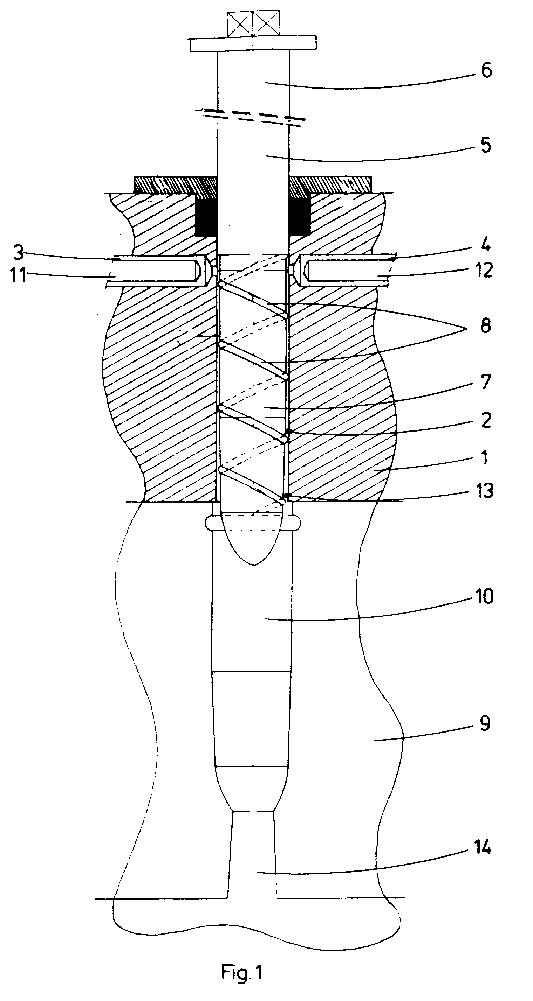

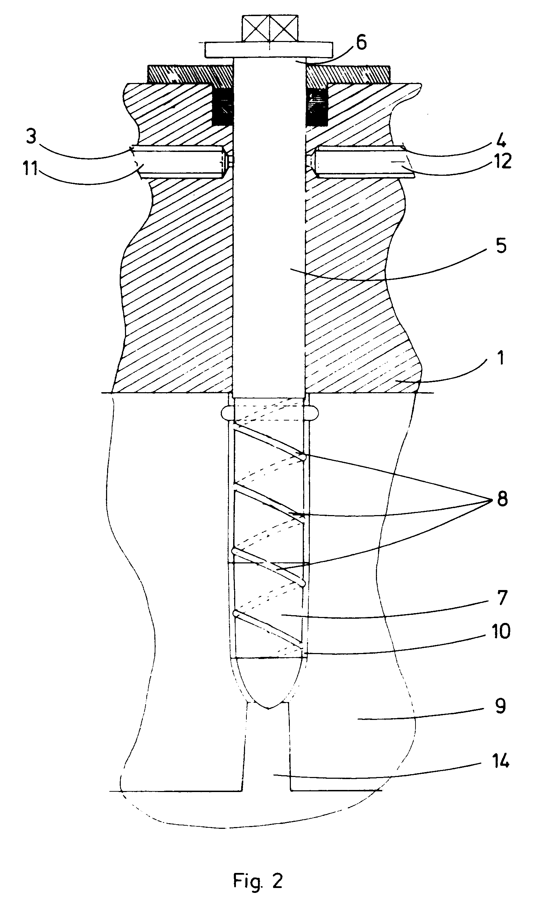

The mixing head functions as follows:
When the mixing starts the plunger 5 is in the position as shown in fig. 1. The plunger 5 rotates and the channels 3 and 4 for supply of the plastic components are opened. The valves 11 and 12 are in the retracted position. The plastic components are supplied into the mixing chamber 2 under pressure and are subjected to a return-pumping motion by the ribs 8 of plunger section 7. As the film layer formed is rubbed off and passes along the ribs 8, very intensive intermixing of the components takes place. In spite of the return-pumping motion by the ribs 8 the mass flow, owing to the supply under pressure of the components, moves to the free end of the plunger and via the gate 10 flows into the mould 9. The part 7 of the plunger 5 provided with ribs 8 is slightly tapered towards the free end. As a result, the thickness of the film layer 13 increases steadily, so that the pressure as well as the outflow speed decrease. When sufficient mixture of the components for a mould charge has been prepared, the rotating plunger moves forward. Immediately after this movement the valves 11 and 12 are closed. The mixing device is then in the recirculation position. The mixture remaining in the mixing chamber is thereby entrained to the mould opening by the close-fitting part 6 of the plunger 5. The mixing chamber is thus cleansed. This position is shown in fig. 2. The rest of the mixture formed is injected into the mould. It is important that while the plunger moves forward towards the mould opening the rotating motion is maintained, since otherwise the mixture that passes last would not be mixed well. After injection into the mould 9 and polymerization of the mixture the opposite rotating and axial motions of the plunger 5 are started. By these combined motions the part of the plunger 7 provided with ribs 8 rotates out of the reacted portion in the gate. When the formed product has been taken out of the mould 9, the cull is removed from the moulding. The plunger 5 is then back in the position shown in fig.1; the feed channels are opened again and mixing of the components for the next mould charge can take place.

The apparatus and process according to the invention provide simply a fully self-cleansing mixing head for the mixing of chemically interreacting plastic components, with injection pressure independent mixing and pressure and speed decrease taking place in the mixing head. The turbulence occurring in the mixing head according to the invention is low, so that the mixture is injected with little turbulence into the mixing head. As a consequence, neither foaming nor air inclusion occurs when the mixing head is opened and during injection of the mixture into the mould.

## Claims

1. Mixing head for mixing of at least two liquid chemically interreacting plastic components, comprising a casing provided with a mixing chamber containing an axially movable plunger (5), with two channels (3, 4) ending in the mixing chamber to feed in the plastic components, which mixing chamber is provided with a connection to a mould (9), wherein the plunger (5) can rotate and wherein over part of its length the plunger (5) fits closely in the mixing chamber, while the circumference of the rest of its length, up to the free end of the plunger, is provided with shear mixing means characterized in that the plunger can rotate into two directions and in that as shear mixing means helically running ribs (8) are provided.

2. Mixing head according to claim 1, characterized in that the ribbed part of the plunger fits in the mixing chamber with minor play.

3. Mixing head according to claims 1 and 2, characterized in that the ribbed part of the plunger is slightly tapered towards the free end.

4. Mixing head according to claims 1-3, characterized in that during the mixing of the plastic components the ribbed part of the rotating plunger (5) is in the mixing chamber.

5. Mixing head according to claims 1-4, characterized in that after the mixing of the plastic components the rotating plunger (5) is moved towards the gate (10) of the mould.

6. Process for mixing of at least two chemically interreacting liquid plastic components with utilization of a mixing head according to one or more of the claims 1-5, wherein during the supply under pressure of the plastic components the part of the plunger (5) provided with shear mixing means is in the mixing chamber, while the mass flow of the components moves to the free end of the plunger (5) and via a gate (10) into the mould (9), after which, after mixing, the plunger (5) is moved axially towards the gate (10) and the rotating motion of the plunger (5) is stopped, the mixing chamber being cleansed by the close-fitting part of the plunger (5) and the rest of the mixture being injected into the mould (9) as the plunger (5) moves forward, after which the mixture polymerizes characterized in that, subsequently the opposite rotating and axial motions of the plunger (5) are started and the ribbed part of the plunger (5) rotates out of the polymerized mixture in the gate (10).

## Patentansprüche

1. Mischkopf zum Mischen von mindestens zwei flüssigen, chemisch interreagierenden, plastischen Komponenten, welcher Mischkopf ein Gehäuse, das mit einer Mischkammer versehen ist, die einen axial bewegbaren Plunger (5) enthält, mit zwei Kanälen (3, 4), die in der Mischkammer enden, um die plastischen Komponenten einzuspeisen, aufweist, welche Mischkammer mit einer Verbindung zu einer Form (9) versehen ist, in welcher Mischkammer sich der Plunger (5) drehen kann und worin der Plunger (5) über einen Teil seiner Länge in die Mischkammer eng eingepaßt ist, während der Umfang des restlichen Teils seiner Länge bis zum freien Ende des Plungers mit Mitteln zum Schermischen versehen ist, dadurch gekennzeichnet, daß sich der Plunger in zwei Richtungen drehen kann und daß als Mittel zum Schermischen schraubenförmig verlaufende Rippen (8) vorgesehen sind.

2. Mischkopf nach Anspruch 1, dadurch gekennzeichnet, daß der gerippte Teil des Plungers mit einem kleinen Spielraum in die Mischkammer paßt.

3. Mischkopf nach Anspruch 1 und 2, dadurch gekennzeichnet, daß der gerippte Teil des Plungers gegen das freie Ende leicht konisch verläuft.

4. Mischkopf gemäß den Ansprüchen 1-3, dadurch gekennzeichnet, daß während des Mischens der plastischen Komponenten der gerippte Teil des sich drehenden Plungers (5) in der Mischkammer ist.

5. Mischkopf nach den Ansprüchen 1-4, dadurch gekennzeichnet, daß der sich drehende Plunger (5) nach dem Mischen der plastischen Komponenten gegen den Einlauf (10) der Form bewegt wird.

6. Verfahren zum Mischen von mindestens zwei chemisch interreagierenden, flüssigen, plastischen Komponenten unter Verwendung eines Mischkopfes nach einem oder mehreren der Ansprüche 1-5, worin während der Zuführung der plastischen Komponenten unter Druck der mit Mitteln zum Schermischen versehene Teil des Plungers (5) in der Mischkammer ist, während sich der Massenfluß der Komponenten zum freien Ende des Plungers (5) und über einen Einlauf (10) in die Form (9) bewegt, wonach der Plunger (5) nach dem Mischen axial gegen den Einlauf (10) bewegt und die Drehbewegung des Plungers (5) gestoppt wird, wobei die Mischkammer vom eng eingepaßten Teil des Plungers (5) gereinigt und der Rest des Gemisches in die Form (9) eingespritzt wird, wenn sich der Plunger (5) nach vor bewegt, wonach das Gemisch polymerisiert, dadurch gekennzeichnet, daß danach die entgegengesetzten Dreh- und Achsenbewegungen des Plungers (5) gestartet werden und sich der gerippte Teil des Plungers (5) aus dem polymerisierten Gemisch im Einlauf (10) herausdreht.

## Revendications

1. Tête de mélange pour mélanger au moins deux composants de matière plastique liquides avec interaction chimique, comprenant un carter pourvu d'une chambre de mélange contenant un plongeur (5) mobile axialement, avec deux canaux (3, 4) s'achevant dans la chambre de mélange, pour y assurer l'alimentation des composants de matière plastique, ladite chambre de mélange étant pourvue d'une liaison à un moule (9), dans laquelle le plongeur (5) peut tourner et dans laquelle, sur une partie de sa longueur, le plongeur (5) est monté avec ajustement serré dans la chambre de mélange, tandis que la circonférence du reste de sa longueur, jusqu'à l'extrémité libre du plongeur, est pourvue de moyens de mélange par cisaillement, caractérisée en ce que le plongeur peut tourner dans deux directions, et en ce que les moyens de mélange par cisaillement prévus sont des nervures (8) s'étendant en hélice.

2. Tête de mélange selon la revendication 1, caractérisée en ce que la partie nervurée du plongeur vient s'ajuster dans la chambre de mélange avec un jeu minima.

3. Tête de mélange selon les revendications 1 et 2, caractérisée en ce que la partie nervurée du plongeur est légèrement effilée en direction de l'extrémité libre.

4. Tête de mélange selon les revendications 1 à 3, caractérisée en ce que, pendant le mélange des composants de matière plastique, la partie nervurée du plongeur rotatif (5) se trouve dans la chambre de mélange.

5. Tête de mélange selon les revendications 1 à 4, caractérisée en ce qu'après le mélange des composants de matière plastique, le plongeur rotatif (5) est déplacé en direction de l'obturateur (10) du moule.

6. Procédé de mélange d'au moins deux composants de matière plastique liquides avec interaction chimique, avec utilisation d'une tête de mélange selon l'une ou plusieurs des revendications 1 à 5, dans lequel, durant l'alimentation sous pression des composants de matière plastique, la partie du plongeur (5) pourvue de moyens de mélange par cisaillement se trouve dans la chambre de mélange, tandis que le débit de composants, se déplace vers l'extrémité libre du plongeur (5) et passe par un obturateur (10) pour entrer dans le moule (9), après quoi, après mélange, le plongeur (5) est déplacé axialement en direction de l'obturateur (10) et le mouvement rotatif du plongeur (9) est stoppé, la chambre de mélange étant nettoyée par la partie à ajustement serré du plongeur (5) et le reste du mélange étant injecté dans le moule (9) avec déplacement vers l'avant du plongeur (5), après quoi le mélange est polymérisé, caractérisé en ce que, subséquemment, les mouvements rotatifs et axiaux opposés du plongeur (5) sont démarrés et la partie nervurée du plongeur (5) tourne en sortant du mélange polymérisé se trouvant dans l'obturateur (10).
